# EUROPEAN PATENT SPECIFICATION

(11) **EP 0 706 031 B1**
(45) Date of publication and mention of the grant of the patent: **15.09.1999**
(21) Application number: 94115656.4
(22) Date of filing: 05.10.1994
(51) Int. Cl.: G01C 21/20

(54) **Navigation system and path search method**
Navigationssystem und Wegsuchverfahren
Système de navigation et procédé de recherche de route

(43) Date of publication of application: 10.04.1996
(73) Proprietor: Xanavi Informatics Corporation, Zama-shi, Kanagawa-ken (JP); HITACHI, LTD., Chiyoda-ku, Tokyo (JP)
(72) Inventor: Fujita, Takehiro, Kokubunji-shi, Tokyo (JP); Nomura, Takashi, Chigasaki-shi, Kanagawa-ken (JP)
(74) Representative: Altenburg, Udo, Dipl.-Phys.

(56) References cited:
- EP-A- 0 372 840
- EP-A- 0 575 943
- WO-A-93/03452
- DE-A- 4 212 884
- PATENT ABSTRACTS OF JAPAN vol. 16, no. 12 (P-1297) 13 January 1992 & JP-A-03 230 299 (SUMITOMO ELECTRIC IND LTD) 14 October 1991

## Description

### BACKGROUND OF THE INVENTION

The present invention relates to navigation technology. More particularly, it relates to an in-vehicle navigation system which searches for a recommendable path complying with a given final destination, and which sequentially teaches the driver of a vehicle the current position of the vehicle and the traveling direction thereof along the recommended path.

Techniques for searching a recommendable path which extends from a point of departure (namely, an origin or a starting point) to a destination point, in compliance with such given points, have been known from the official gazette of Japanese Patent Application Laid-open No. 306400/1990, and a paper "Path Search Algorithm based on Hierarchical Expression of Road System and Application to Map Information Processing System" (Bulletin of the Japan Institute of Information Processing, Vol. 32, No. 5, pp. 659-666, March 1990).

As illustrated in Fig. 14A, the technique disclosed in the official gazette of Japanese Patent Application Laid-open No. 306400/1990 divides a map into each unit area of predetermined size and shape (into individual square cells shown in the figure) so as to manage the unit areas, and it makes a path search based upon the map data of the unit areas. Herein, when the point of departure and the destination point exist in different unit areas from each other, the path search is made by setting any of the following as a search area (an area to-be-searched):
(1) Unit areas which are traversed by a straight line joining both the points
(2) Unit areas which are traversed by a straight line joining both the points, and unit areas which adjoin the former unit areas
(3) Among unit areas traversed by a straight line joining both the points and unit areas adjoining the former unit areas, the unit areas each of which adjoin at least two other unit areas

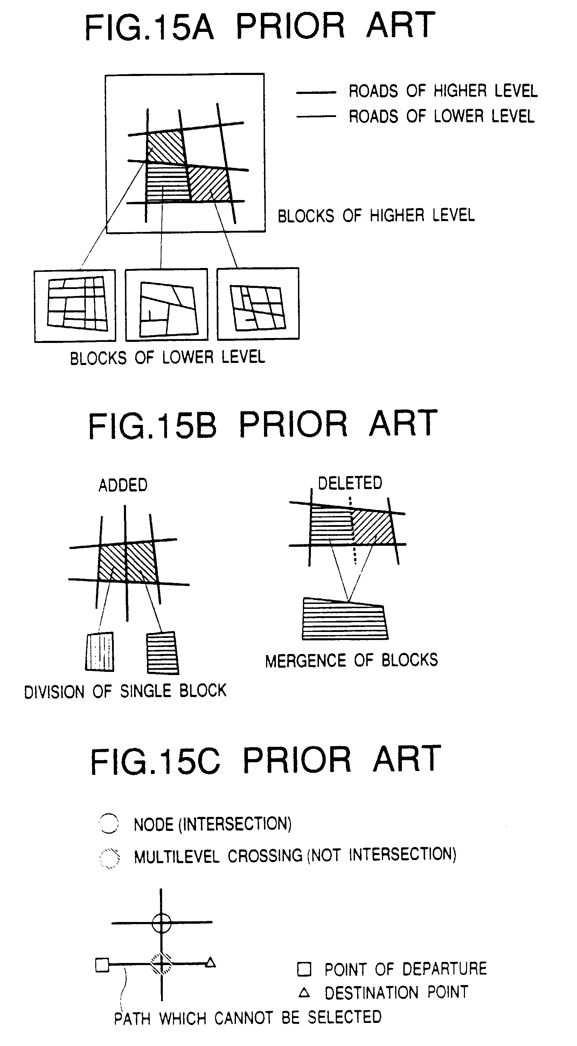

On the other hand, according to the technique stated in the paper "Path Search Algorithm based on Hierarchical Expression of Road System and Application to Map Information Processing System", as illustrated in Fig. 15A, road data are successively hierarchized in such a way that the road data are classified into a plurality of hierarchies such as express highways, national roads and small local roads. In each of the hierarchies thus mentioned, a closed area (block) surrounded with and comprising roads of higher hierarchy is managed as the lower-level block of that block of the higher hierarchy. Herein, the path is searched for every block and in a stepwise manner from the block of the lower hierarchy to the block of the higher hierarchy. Besides, in the path search, the path extending to the higher hierarchy is searched for from both the road nearest the point of departure and the road nearest the final destination point.

With the technique disclosed in the official gazette of Japanese Patent Application Laid-open No. 306400/1990, objects to be searched for can be limited. Since, however, roads are omitted, this technique poses the problem that an appropriate path cannot be selected.

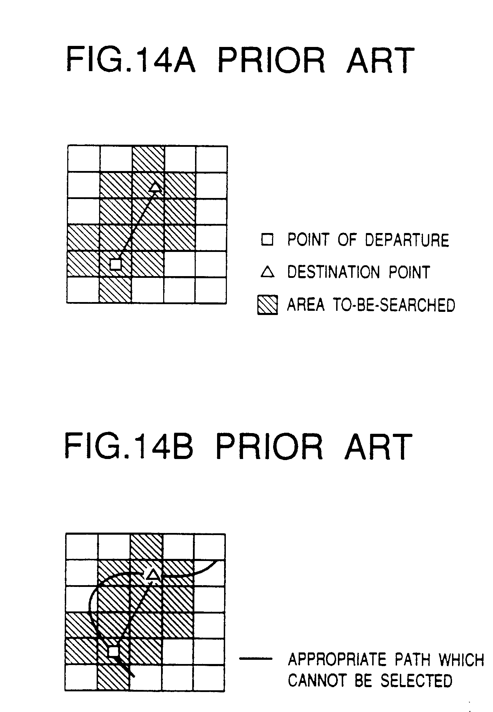

By way of example, consider a case where an express highway joining the point of departure and the destination point exists as shown in Fig. 14B. In this case, the express highway extends, slightly, out of the set search area, and since it is not continuous within the search area, it cannot be selected. Thus, there is a high possibility that the more preferable path will fail to be selected notwithstanding that express highways, national roads and general roads are usually more suitable or travels in the order mentioned.

Meanwhile, the omission of the roads is relieved, when the size of each unit area is increased, but theis leads to an increase in the number of objects to be searched.

On the other hand, the technique stated in the paper "Path Search Algorithm based on Hierarchical Expression of Road System and Application to Map Information Processing System" has problems concerning difficulty in maintenance of road data.

More specifically, as illustrated in Fig. 15B, in a case where a road has been added or deleted at any hierarchical level other than the lowermost level, the block which belongs to the lower hierarchy of the block of the added or deleted road must be reorganized by the division of the single block or the mergence of the blocks.

Another problem is that the identification of the adjacent blocks is difficult because the area of the individual management blocks are nonuniform, and the numbers of the adjacent blocks usually becomes nonuniform.

Consequently, in a case where the map information processing system guides the vehicle during the running thereof by displaying the map on a display unit, it is difficult to scroll a screen and display the next block with the movement of the vehicle. Therefore, the technique used in this system is not suited for use on vehicles.

Moreover, the roads are not managed for extending blocks of the same hierarchy, but the path extending to the road of higher level is searched for every block, followed by the path search in the higher hierarchy. A problem is thus presented, when the multilevel crossing between the road of higher level and the road of lower level is existent, the connection of the lower-level road common to the blocks is lost. In a case as shown in Fig. 15C where the point of departure and the destination point have been set on the road which bridges the blocks and which forms the multilevel crossing with the higher-level road being the boundary of these blocks, the path containing such a road cannot be searched for in spite of it being the optimum path.

### SUMMARY OF THE INVENTION

In view of the prior art, the object of the present invention is to provide a navigation system in which a more preferable path can be quickly searched using a map data format that is easy to maintain.

In order to accomplish the object, according to the present invention, a navigation system for installation on a vehicle comprises: storage means for storing therein road data of roads which belong to management areas, for each of the management areas being geographical areas of predetermined extent and shape and for each of hierarchies corresponding to types of roads; positioning means for detecting a current point and a traveling direction of the vehicle; set input means for accepting setting of a destination point; path search means for searching for a path which extends from a given point of departure to the destination point; and guidance means for guiding running of the vehicle on the basis of the current point measured by the positioning means and the path searched for by the path search means; the path search means making the search for the path sequentially in the respective hierarchies, as to each of the respective hierarchies and on the basis of the road data of the pertinent hierarchy relevant to at least one of the management areas as lies within limits having a size which corresponds to the pertinent hierarchy.

Besides, such a navigation system, the path search means should desirably make the path search in such a way that nodes connecting the roads in higher hierarchies and paths extending to the nodes are searched for from the point of departure and from the destination point, sequentially in the respective hierarchies from the hierarchies corresponding to the point of departure and the destination point up to the hierarchy corresponding to a distance between the point of departure and the destination point, the connecting nodes and the extending paths being searched for as to each of the respective hierarchies and on the basis of the road data of the pertinent hierarchy relevant to at least one of the management areas as lies within the limits having the size which corresponds to the pertinent hierarchy, and that a path is searched for between the nodes which have been searched for and which connect with the roads in the hierarchy corresponding to the distance between the point of departure and the destination point.

According to the navigation system of the present invention, the road data of the roads belonging to the management areas are stored for each of the management areas which have the predetermined extent and shape and which are easy to maintain, and for each of the hierarchies which correspond to the sorts of the roads. In searching for the path, an area to be searched is limited to the size which corresponds to each of the hierarchies. Under this condition, the path is searched sequentially in the respective hierarchies, as to each of the respective hierarchies and on the basis of the road data of the pertinent hierarchy relevant to at least one of the management areas as lies within the limits.

### BRIEF DESCRIPTION OF THE DRAWINGS

Fig. 1 is a block diagram showing the construction of a navigation system in an embodiment of the present invention;
Fig. 2 is a block diagram showing an example of the hardware architecture of the navigation system;
Figs. 3A and 3B are diagrams for determining the concept of road data management in the navigation system;
Figs. 4A through 4G are diagrams showing the situation of a path search;
Figs. 5A thrrough 5D are diagrams showing the situation of the search for a path which extends to a road of higher hierarchy;
Fig. 6 is a flow chart showing the processing steps of the path search;
Fig. 7 is a flow chart showing the processing steps of the path search which is made within a candidate area;
Fig. 8 is a flow chart showing the processing steps of the search for a path which extends to a road of higher hierarchy;
Fig. 9 is a flow chart showing the initial processing steps of a guidance process;
Fig. 10 is a flow chart showing the processing steps of an in-running guidance process;
Figs. 11A through 11C are diagrams each showing an example of a guidance screen;
Fig. 12 is a diagram showing management areas contained in a candidate search area to-be-searched which is set to be circular;
Fig. 13 is a diagram showing the situation of the determination of a search starting point in a higher hierarchy;
Figs. 14A and 14B are diagrams showing a path search technique in the prior art; and
Figs. 15A through 15C are diagrams showing another path search technique in the prior art.

### PREFERRED EMBODIMENTS OF THE INVENTION

Now, one embodiment of a navigation system according to the present invention will be described in conjunction with the accompanying drawings.

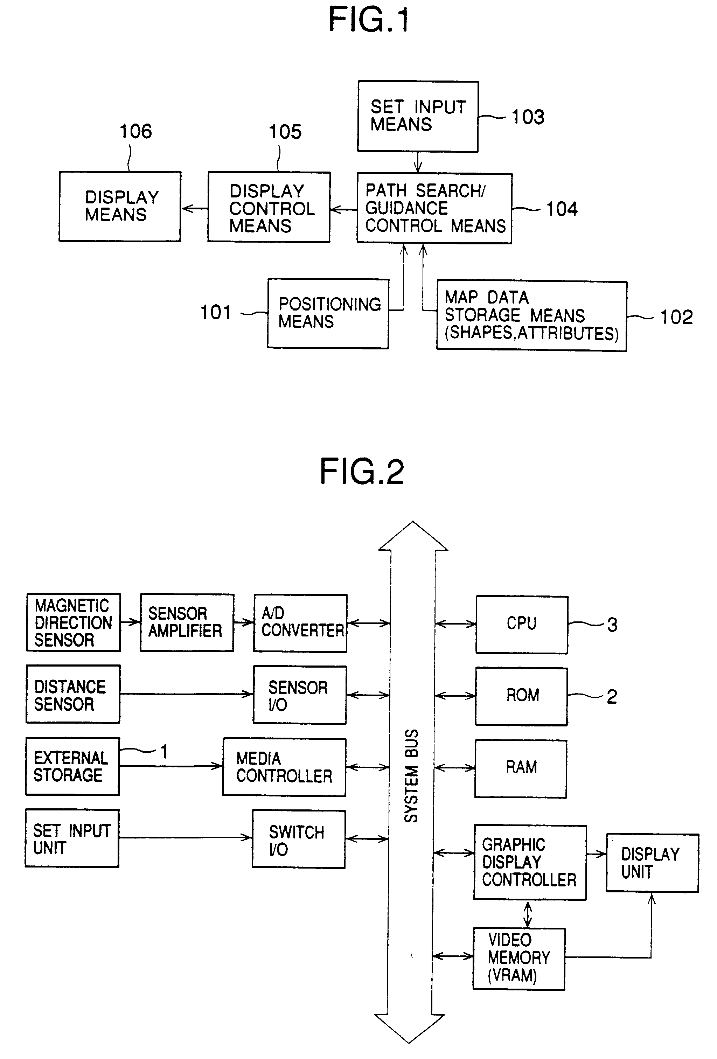

Fig. 1 illustrates the construction of the navigation system in this embodiment.

Referring to the figure, positioning means 101 includes a geomagnetic sensor, a gyro sensor, a GPS (global positioning system) sensor or the like, and the positionng means executes a map matching process etc. so as to detect the current position of a vehicle on which the navigation system is installed. Map data storage means 102, such as a CD-ROM (compact-disk read-only memory), stores therein map data relating to map information. Set input means 103 includes switches of mechanical type, photoelectric type or the like, and it accepts the setting of the destination point (or end point) of the vehicle. Path search/guidance control means 104 searches for a path or route, and controls a guidance display on the basis of the path searched for. Display control means 105 controls the display on display means 106, such as a CRT (cathode-ray tube) or LCD (liquid-crystal display), under the control of the path search/guidance control means 104.

In addition, the navigation system in this embodiment may well be implemented by a hardware architecture as shown in Fig. 2. Herein, a microcomputer circuit is principally configured of a ROM 2 in which programs such as path search and guidance programs are stored, a CPU (central processing unit) 3 which executes the programs, and a RAM (random access memory) which is used as the work area of the CPU 3. The following are connected to the microcomputer circuit by respectively suitable means : sensors incorporating an external storage, such as CD-ROM, 1 storing map data therein; a display unit such as CRT or LCD; and an input/output device such as set input unit.

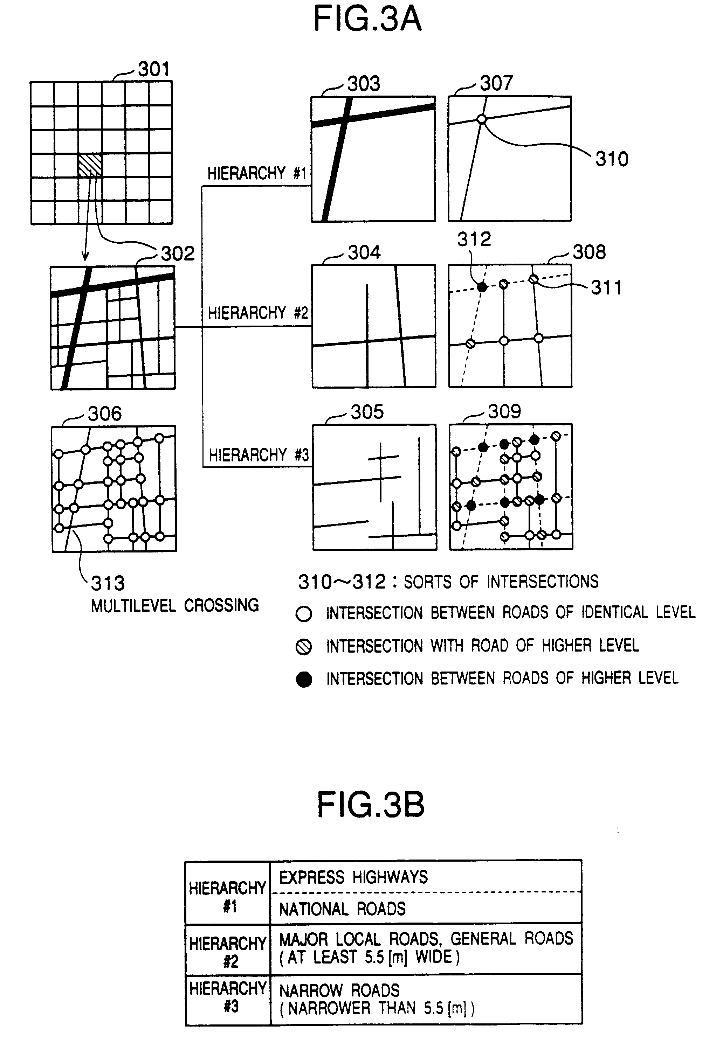

The navigation system in this embodiment manages the map data as illustrated in Figs. 3A and 3B.

In Fig. 3A, numeral 301 indicates one section or compartment of the map data. Such sections are obtained by dividing the map into units of a predetermined width in longitude and latitude. Each of the sections are identified for management with a management No. based on the longitude and latitude of the left lower corner point of the particular section. Accordingly, the adjacent the sections can be identified with ease.

Each section is subdivided into areas in units of predetermined width in longitude and latitude. The areas are set as management areas, which are utilized for management within the particular section.

In the case of Fig. 3A, numeral 302 designates one management area lying in the section 301, and numeral 306 designates road data contained in the management area 302. That is, 302 is an enlarged view of 301 and 306 is an enlarged view of 302. As illustrated in the figure, the road data comprisies data of shapes of roads (a plane coordinate array in which the roads are expressed by randam arraay of lines), and network data which consist of nodes expressive of intersections and links expressive of the connectional relations of the intersections (connection information items each of which has the Nos. of the adjacent ones of the nodes in a pair). The types of individual roads are also registered in the shape data. In addition, the node No. is assigned to each of the nodes, and it permits the particular node to be uniquely identified. Even when the connection between the nodes bridges the adjacent management areas, the node Nos. of the connecting nodes are registered in the corresponding links.

In this embodiment, the road data of the management areas 302 are hierarchized for the respective sorts of the roads, and the resulting hierarchies are utilized for management. By way of example, as tabulated in Fig. 3B, express highways and national roads are set as hierarchy #1 at the uppermost level, major local roads and general roads are set as hierarchy #2, and narrow roads each having a width less than 5.5 [m] are set as hierarchy #3 at the lowermost level. However, in a case where the gateway of the express highway is connected with the national road by the road of the hierarchy #2, this road of the hierarchy #2 is brought into the higher hierarchy #1, thereby preventing the discontinuities in road network.

As a consequance of this hierarchizing operation, the roads of the management area 302 are classified into roads 303 which are registered in the hierarchy #1, roads 304 which are registered in the hierarchy #2, and roads 305 which are registered in the hierarchy #3. In accordance with the classification, road data 307 shown in Fig. 3A are registered in the hierarchy #1 of the management area 302, road data 308 in the hierarchy #2 thereof, and road data 309 in the hierarchy #3 thereof.

Here, the road data of each hierarchy to be registered contain, not only the shape data, but also the node 310 between the roads included in the particular hierarchy, as well as the link corresponding to this node 310, and the node 311 between the road included in the particular hierarchy and the road included in the higher hierarchy, as well as the link corresponding to this node 311. Further, when the nodes 311 with the roads of the higher hierarchy are connected by the road of the higher hierarchy, the link between these nodes 311 is also registered. In other words, when the intersection 311 is adjacent, the information of the connection by the road of higher level is also registered. Still further, regarding that node 311 with the road of the higher hierarchy which adjoins the node 312 between the roads of the higher hierarchy (that is, which is joined by the road of the higher hierarchy), the link with the node 312 between the roads of the higher hierarchy is also registered. In other words, regarding the intersection which adjoins the intersection 312, the information of the connection with the intersection of the corresponding higher level is also registered. In a case where the hierarchies are separated for the respective sorts of the roads as tabulated in Fig. 3B and where the node 312 in the higher hierarchy is not registered in the lower hierarchy, the link of the higher hierarchy and that of the lower hierarchy can be associated in such a way that, as to each node 311, the node Nos. of both those ends of the higher hierarchy with which the particular node 311 connects are registered. As another hierarchizing method, the higher hierarchy/hierarchies may well be included in each of the hierarchies indicated in Fig. 3B. That is, the road data can be classified into ① hierarchy #1, ② hierarchy #1 + hierarchy #2, and ③ hierarchy #1 + hierarchy #2 + hierarchy #3 (all the roads) by way of example. In this case, the nodes 312 of the higher hierarchies are registered in the lower hierarchies.

Even in a case where the node or link to be registered is existent in any management area different from the particular management area (302 in Fig. 3A), it is similarly registered.

In addition, the distance between nodes and an average passing time period are registered as the factors of a passing cost in each road link.

Thus, in this embodiment, the road network included in the management area 302 is expressed by the three hierarchies. On this occasion, the size of one management area may well be changed for each of the hierarchies. More specifically, the volumes of data are smaller in the higher hierarchies. Therefore, it is also allowed, by way of example, to manage the hierarchy #3 in units of the single management area 302, to manage the hierarchy #2 with n*n (where letter n denotes an integer greater than one) management areas 302 set as one management area, and to manage the hierarchy #1 with N*N (where letter N denotes an integer greater than the integer n) management areas 302 set as one management area.

Meanwhile, when the hierarchical levels of roads are set as tabulated in Fig. 3B, the road at the higher level is more suited to the movement of the vehicle, and the density of road data in one management area is lower (the number of intersections is smaller) as to this road. Therefore, when a path is to be selected, a search for the path is preferentially promoted to the road hierarchy of the higher level, that is, it is replaced with a search at the higher level, whereby the number of nodes to be searched for can be limited, and the path suited to the running of the vehicle can be selected. Under such a principle, accordingly, the path search/guidance control means 104 makes the path search as explained below.

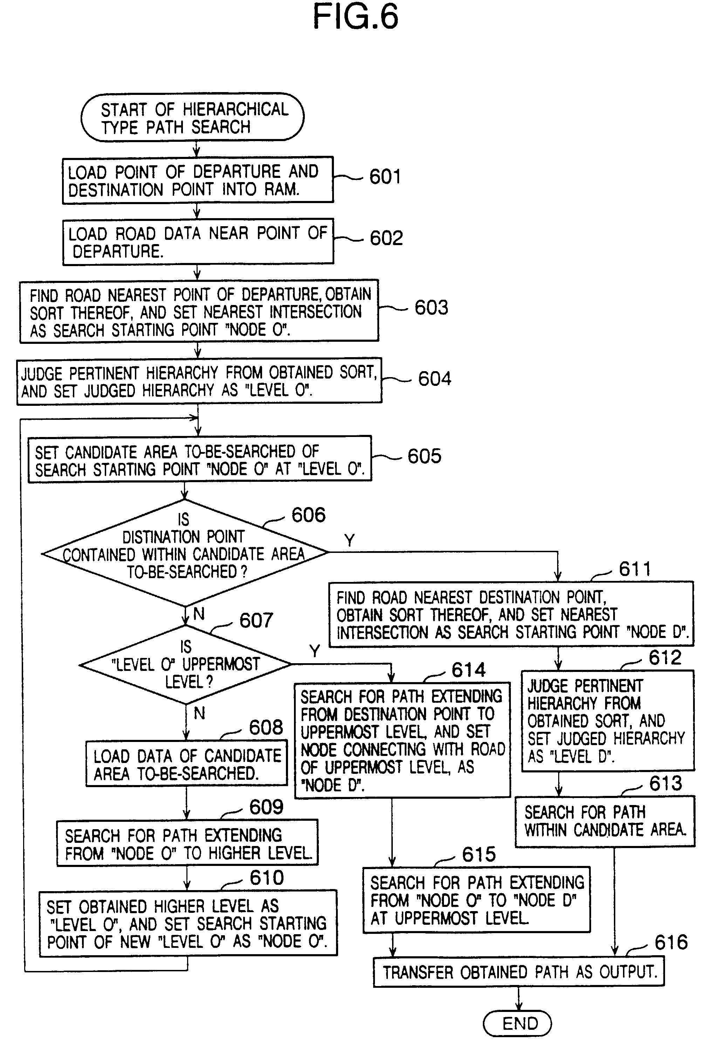

Figs. 6, 7 and 8 illustrate the processing steps of a path search process which is executed by the path search/guidance control means 104.

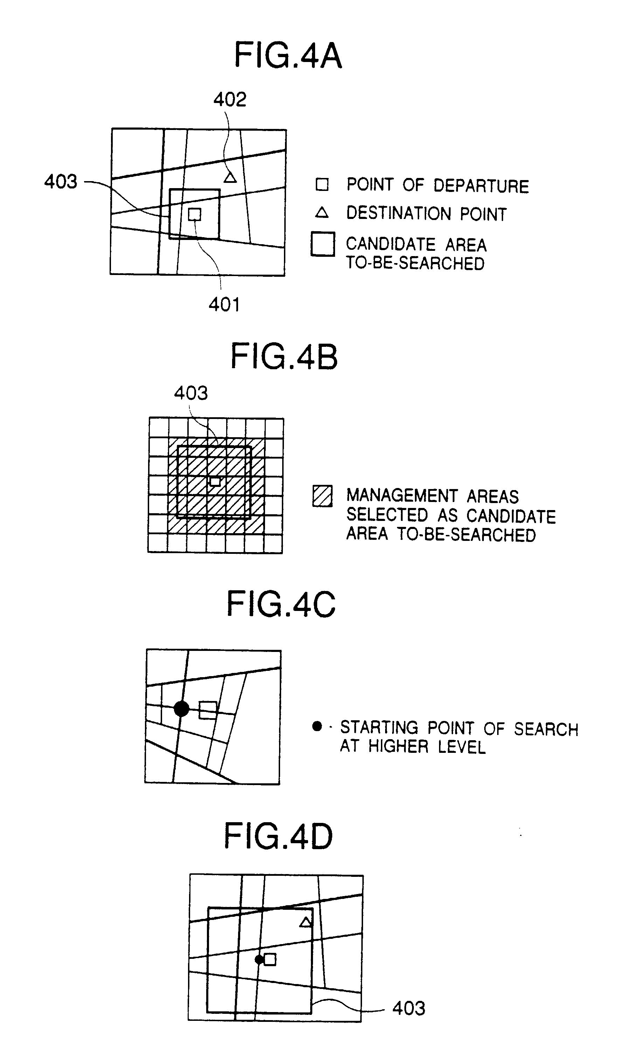

First, a destination point 402 shown in Fig. 4A as set by the set input means 103 is referred to (step 601), and the path search is started from the side of a point of departure 401 shown in Fig. 4A (steps 602 to 610). In the case of the in-vehicle navigation system, the point of departure 401 is set at a current position which is measured by the positioning means 101.

Subsequently, a road and an intersection which are nearest the point of departure 401 are found, the nearest intersection found is set as a search starting point "NODE O (origin)", and the hierarchy to which the nearest road found belongs to is set as a hierarchy "LEVEL O" (steps 603 and 604). Further, one or more management areas lying within those limits around the search starting point "NODE O" which are determined by the hierarchy "LEVEL O" are set as a candidate search area to-be-searched (a candidate for a search area to-be-searched) "0" (403 in Figs. 4A and 4B) (step 605). In addition, if the destination point 402 is contained in the candidate search area "O", the point 403 is checked (step 606). Here, the candidate search area "O", the point 403 is identified with a larger area in the higher hierarchies. By way of example, it is set as follows:

Hierarchy #3: Management areas included in 5 [km²] about the search starting point.

Hierarchy #2: Management areas included in 20 [km²] about the search starting point.

Hierarchy #1: Management areas included in 40 [km²] about the search starting point.

The management areas corresponding to the candidate search area "O" 403 are clearly shown in Fig. 4B. When the destination point 402 is not contained in the candidate search area "O" 403 as seen from Fig. 4A, it is judged that a movement along only the roads of the pertinent hierarchy "LEVEL O" is insufficient. Subsequently, if the hierarchy "LEVEL O" is the uppermost level is checked (step 607). When the hierarchy "LEVEL O" is not the uppermost level, the data of the hierarchy "LEVEL O" concerning the candidate search area "O" 403 are read out of the map data storage means 102 (step 608) until the destination point 402 is contained in the candidate search area "O" 403 as seen from Fig. 4D. Next, the path search/guidance control means 104 searches for an intersection (as sown in Fig. 4C) which serves as an entrance from the search starting point "NODE O" to the road of the hierarchy directly higher than the pertinent hierarchy "LEVEL O", and a path which extends to the intersection (step 609). The intersection found is set as a new search starting point "NODE O", and the directly higher hierarchy is set as a new hierarchy "LEVEL O" (step 610). Thereafter, the means 104 iterates the processing of the step 605 at which a new candidate search area to-be-searched "O" corresponding to the new hierarchy "LEVEL O" is set, and the step 606 which decides whether or not the destination point 402 is contained in the new candidate search area "O"

As explained above, the path search is promoted to the higher level stepwise. Incidentally, when the search starting point at the higher level has been found, a node corresponding thereto is added to the higher level. On this occasion, the No. of that node adjacent the corresponding node which is at the higher level is registered as connection information. The Nos. of such adjacent nodes are registered as the association information of the links of the higher level and those of the lower level beforehand.

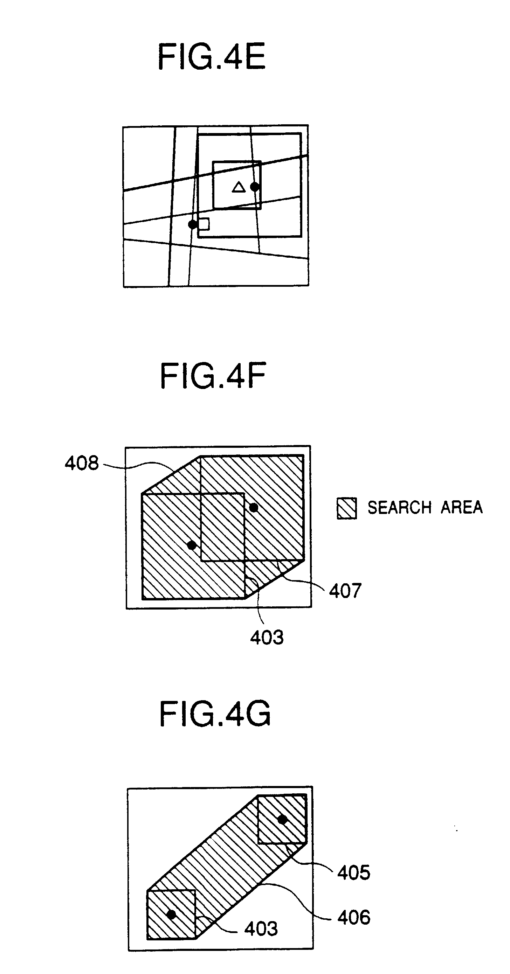

Referring back to Fig. 6, even in the case where the destination point 402 is not contained in the candidate search area "O" 403, a path is searched for in the hierarchy #1 on condition that the hierarchy "LEVEL O" has become the uppermost level (hierarchy #1), because no higher hierarchy is existent. More specifically, an intersection serving as an entrance from the destination point to the road of the hierarchy #1 and a path extending to the intersection are searched for, the intersection found is set as a search starting point "NODE D (destination)", and the hierarchy #1 is set as a hierarchy "LEVEL D" (step 614). Subsequently, as illustrated in Fig. 4G, a candidate search area to-be-searched "D" 405 is set around the search starting point "NODE D" in accordance with the hierarchy "LEVEL D" similarly to the candidate search area "O" 403 having been set around the search starting point "NODE O" in accordance with the hierarchy "LEVEL O", an area 406 which adjoins both the candidate search area "O" 403 and the candidate search area "D" 405 is set as the search area to-be-searched (the real search area), and a search for the minimum-cost path is made on the basis of the road data of the hierarchy #1 contained in the search area 406, thereby finding the path which extends from the search starting point "NODE O" to the search starting point "NODE D" (step 615). Thus, the whole path extending from the point of departure 401 to the destination point 402 has been obtained in sequential fashion. It is transferred as an output (step 616), whereupon the path search process is ended.

Meanwhile, when it has been decided at the step 606 that the destination point 402 is contained in the candidate search area "O" 403 as shown in Fig. 4D, the flow of the path search process shifts to a path search from the destination point 402.

As seen from Fig. 4E, a road and an intersection which are nearest the destination point 402 are found, and the found intersection is set as a search starting point "NODE D" (step 611). Further, the hierarchy to which the found road belongs is set as a hierarchy "LEVEL D", and one or more management areas around the search starting point "NODE D" as lie within limits which are determined by the hierarchy "LEVEL D" are set as a candidate search area to-be-searched "D" (step 612). Subsequently, a path search is made within the candidate search area "D" (step 613). A path searched for is transferred as an output (step 616), whereupon the path search process is ended.

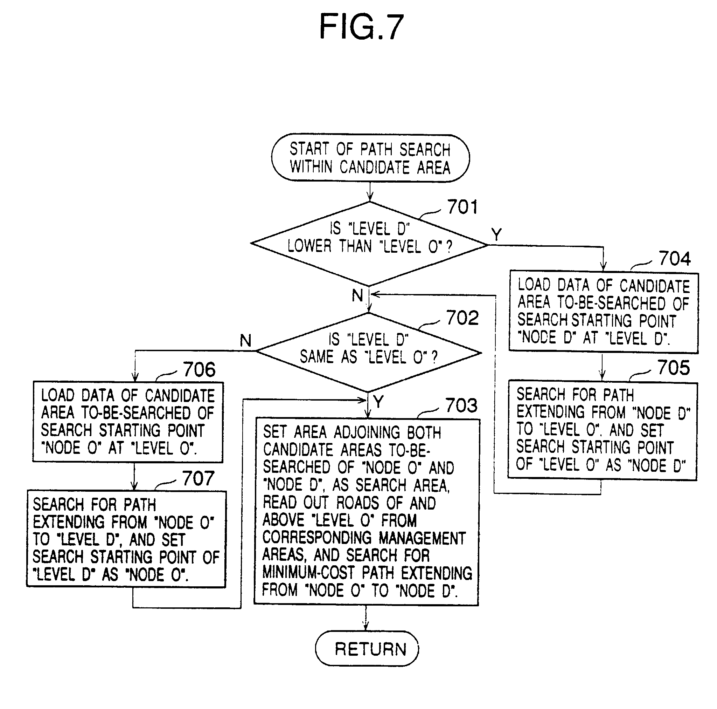

The path search within the candidate search area "D" at the step 613 proceeds in accordance with a flow illustrated in Fig. 7.

In a case where the hierarchy "LEVEL D" set by the sort of the road nearest the destination point 402 is lower in level than the hierarchy "LEVEL O" (step 701), the road data of the hierarchy "LEVEL D" as required for the candidate search area "D" are read out of the map data storage means 102 (step 704). At the next step 705, the path search/guidance control means 104 searches for an intersection which serves as an entrance from the search starting point "NODE D" to the road of the pertinent hierarchy "LEVEL O", and a path which extends to the intersection. Herein, the search is made sequentially in the higher hierarchies. Concretely, the intersection found is set as a new search starting point "NODE O", the hierarchy "LEVEL D" is equalized to the hierarchy "LEVEL O", and a new candidate search area to-be-searched "D" 407 corresponding to the new hierarchy "LEVEL D" is set as shown in Fig. 4F. Now that the hierarchies "LEVEL D" and "LEVEL O" are the same (step 702), an area 408 (also shown in Fig. 4F) which adjoins both the candidate search area "O" 403 and the candidate search area "D" 407 is set as the search area to-be-searched (the real search area), and a search for the minimum-cost path is made on the basis of the road data of and above the hierarchy "LEVEL O" (= "LEVEL D") ) as are contained in the search area 408, thereby finding the path which extends from the search starting point "NODE O" to the search starting point "NODE D" (step 703). As explained above, the road data of and above the hierarchy "LEVEL O" (= "LEVEL D"), such as the data of all the hierarchies #1 thru #3 for the hierarchical level #3 or the data of the hierarchies #1 and #2 for the hierarchical level #2, are all extracted. The reason therefor is that the path easier of movement can be searched for by making the search which is based on, not only the data at the level "LEVEL O" (= "LEVEL D") having determined the search area 408, bat also the data at the still higher level. Incidentally, since the density of the data at the higher level is ordinarily lower than the road density at the pertinent lower level, the addition of a road at the higher level poses no problem in the search operation. Moreover, a multilevel crossing (which is not the "intersection" mentioned before) can be coped with by covering the data of the level which has determined the search area 408.

On the other hand, in a case where the hierarchy "LEVEL D" set by the sort of the road nearest the destination point 402 is higher in level than the hierarchy "LEVEL O" (steps 701 and 702), the road data of the hierarchy "LEVEL O" as required for the candidate search area "O" are read out of the map data storage means 102 (step 706). At the next step 707, the path search/guidance control means 104 searches for an intersection which serves as an entrance from the search starting point "NODE O" to the road of the pertinent hierarchy "LEVEL D", and a path which extends to the intersection. Herein, the search is made sequentially in the higher hierarchies. Concretely, the intersection found is set as a new search starting point "NODE O", the hierarchy "LEVEL O" is equalized to the hierarchy "LEVEL D", and a new candidate search area to-be-searched "O" 403 corresponding to the new hierarchy "LEVEL O" is set as shown in Fig. 4F. Subsequently, an area 408 which adjoins both the candidate search area "O" 403 and the candidate search area "D" 407 is set as the search area to-be-searched (the real search area), and a search for the minimum-cost path is made on the basis of the road data of and above the hierarchy "LEVEL D" (= "LEVEL O") as are contained in the search area 408, thereby finding the path which extends from the search starting point "NODE O" to the search starting point "NODE D" (step 703).

As explained above, the search for the minimum-cost path is made after the levels of the search starting points "NODE O" and "NODE D" are brought into agreement. The reason therefor is that, if the destination point 402 is near the road of the higher hierarchy, the movement of the vehicle is facilitated by advancing from the side of the point of departure 401 up to this higher hierarchy from the first.

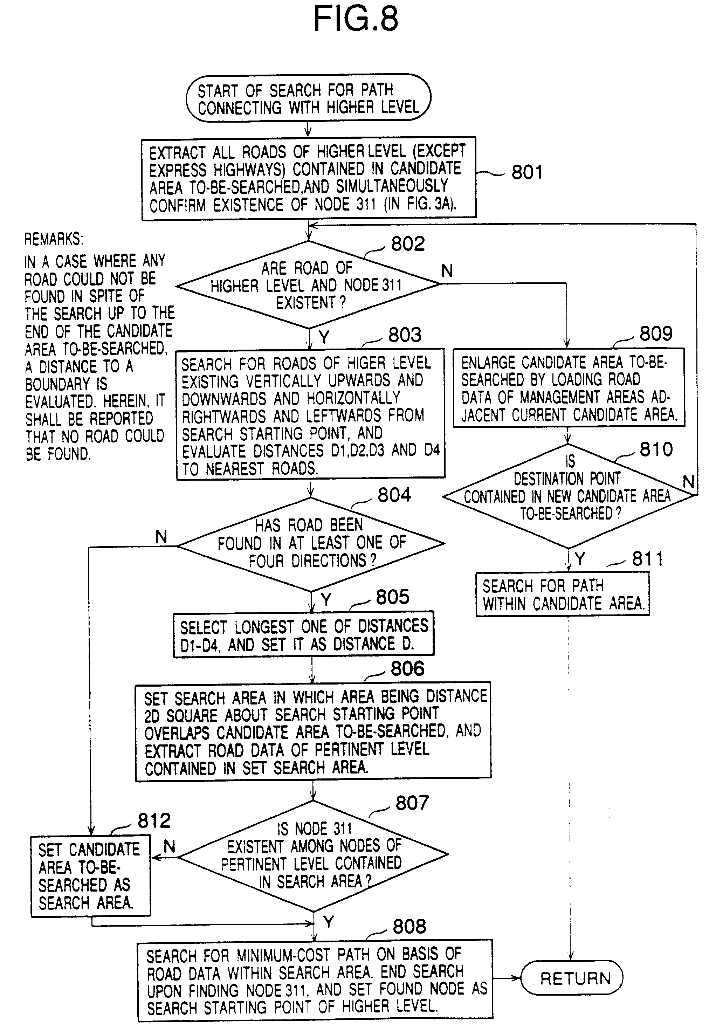

In the above processing, each of the steps 609, 705 and 707 searches for the intersection which serves as the entrance from the search starting point to the road of the higher hierarchy, and the path which extends to the intersection. Here, the processing steps of this search operation will be described with reference to Fig. 8.

As indicated in the figure, the roads of the current search level and those of the higher search level contained in the candidate search area to-be-searched are all extracted, and it is confirmed that the road of the higher level exists within the candidate search area (steps 801 and 802). On this occasion, it is confirmed that the intersection (the node 311 in Fig. 3A) with the road of the higher hierarchy is also existent. Herein, however, intersections with the express highways of the hierarchy #1 shall be excluded from the objects of the search. The reason therefor is that, since the nodes between the express highways and the roads of the other sorts are limited in number, they are difficult to be found.

On condition that the road of the higher level does not exist within the candidate search area, this candidate search area is enlarged (step 809) When, as a result, the other search starting point (the destination point as opposed to the point of departure) enters the candidate search area, the path search process ends the search for the intersection serving as the entrance to the road of the higher hierarchy and the path extending to the intersection, and it shifts to the search within the candidate search area of the higher level (step 611 in Fig. 6) (steps 810 and 811).

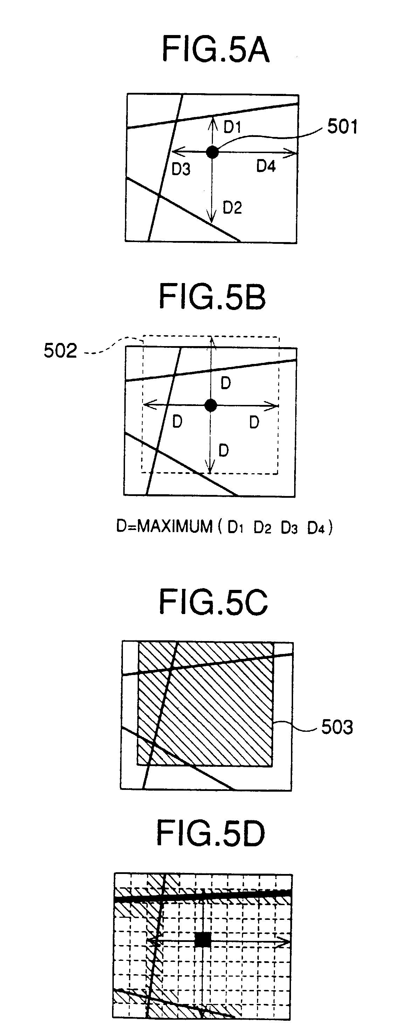

In contrast, on condition that the road of the higher level exists within the candidate search area (step 802), it is checked if the roads of the higher level exist in the upper, lower, right and left directions of a search starting point (501 shown in Fig. 5A) (steps 803 and 804). Among the roads of the higher level in the upper, lower, right and left directions, the road which is the farthest from the search starting point has its distance D evaluated (step 805). Subsequently, the range (502 in Fig. 5B) of a regular square which has its center at the search starting point and each side of which is 2D long is obtained, and that part (503 in Fig. 5C) of the range 502 which overlaps the candidate search area is set as the search area to-be-searched (the real search area) (step 806). By the way, in a case where no road at the higher level exists in the upper, lower, right and left directions of the search starting point, the candidate search area is set as the real search area (step 812).

The aforementioned range 502 can be obtained in the following way: As illustrated in Fig. 5D, the candidate search area is divided into meshes, and shape data are registered in the corresponding meshes. In this state, the meshes in the upper, lower, right and left directions are examined beginning with the mesh in which the node of the search starting point is contained.

After the step 806, the node 311 connecting with the road of the higher level is found within the search area (step 807), and the minimum-cost path extending to the node 311 is searched for (step 808). In a case where only the multilevel crossing exists within the search area (807), the candidate search area is set as the real search area (812), in which the node 311 connecting with the road of the higher level is found, and the minimum-cost path extending to the found node 311 is searched for (step 808).

Further, in a case where an intersection connecting with the road of a higher hierarchy and a path extending to the intersection are to be obtained, the node 311 found is set as a search starting point, the hierarchy to-be-handled is promoted one level, and a candidate search area to-be-searched is set in accordance with the new search starting point and the new hierarchy. Thereafter, the above processing is iterated.

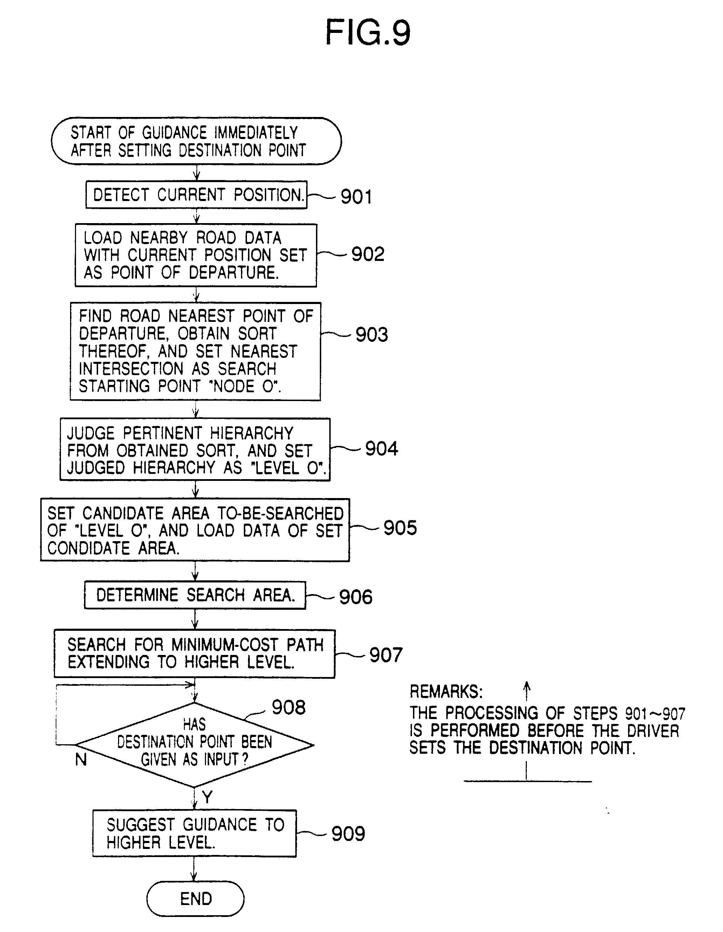

Owing to the path search process thus far described, the optimum path extending from the point of departure to the destination point can be searched for. Herein, in the case where the navigation system according to this embodiment is installed for the vehicular use, an operation for giving a guidance suggestion may well be permitted to begin immediately after the driver of the vehicle has set the destination point, as illustrated in Fig. 9.

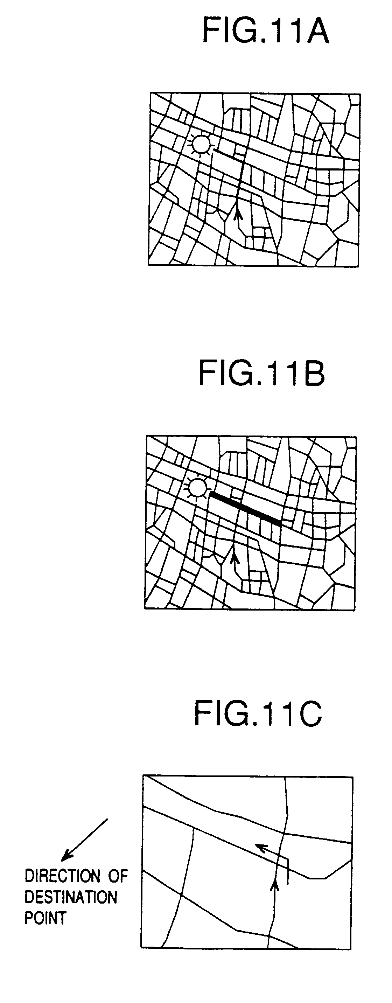

More specifically, when the driver has made a request for a path search/guidance, a path extending to the road of a higher hierarchy is searched for by utilizing the information of the current position of the vehicle, beforehand without waiting for the end of the setting of the destination point (steps 901 thru 907). Thus, the first guidance suggestion can be prepared while the driver is setting the destination point. When the destination point has been set (step 908), the result of the search to the road of the higher hierarchy is offered as the guidance suggestion to the driver for the time being (step 909). If the current position is the road of the uppermost level, a path connecting with an intersection which is nearest the destination point in the traveling direction of the vehicle is offered as the temporary guidance suggestion to the driver after the guidance request has been made. The guidance suggestion on this occasion can be given in such a way that a display as shown in Fig. 11A or Fig. 11B is presented on the display means 106. As seen from rig. 11A or Fig. 11B, it is suggested to pass the search starting intersection of the higher level and to run to the nearest intersection of the higher level. The path and the intersection which have been selected are highlighted. A prompt "PLEASE RUN TO ROAD XX AND DRIVE TOWARD INTERSECTION XX" may well be displayed or sounded. Owing to the guidance process, the driver's path guidance request can be quickly responded to. By the way, it is also allowed that, even when the driver does not make the path search/guidance request, the path extending from the current position to the road of the higher level may well be searched for beforehand, thereby making it possible to quickly cope with the request. In this case, the search for the path extending to the road of the higher level is made periodically in accordance with the computing capability of the on-vehicle system.

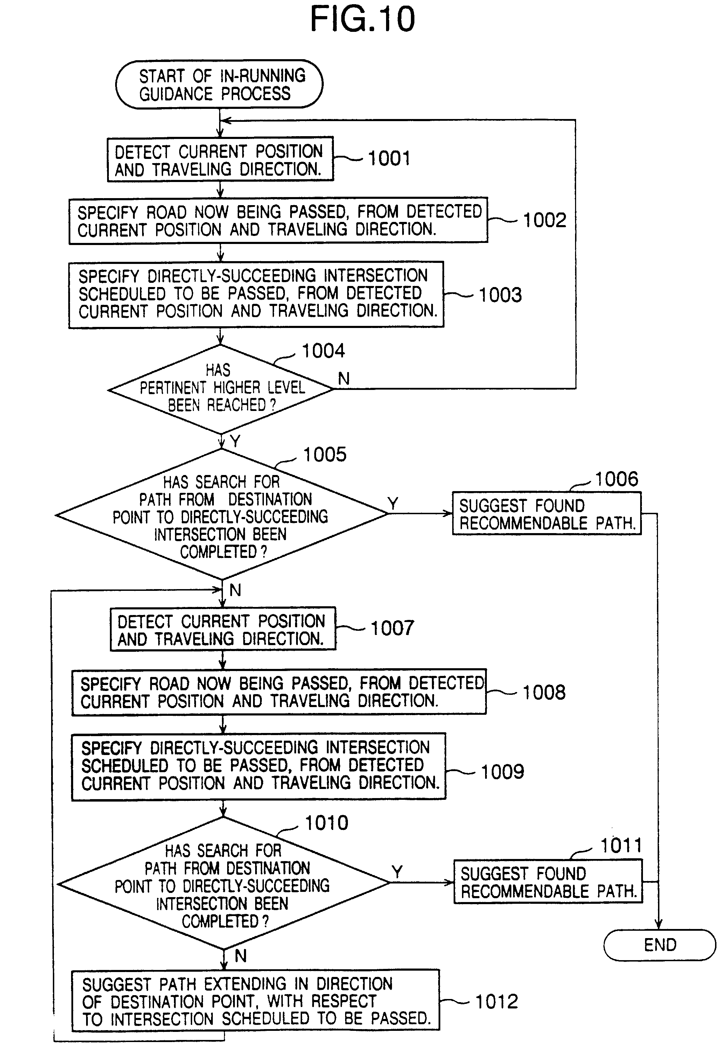

After having offered the guidance suggestion as shown in Fig. 11A or Fig. 11B, the on-vehicle navigation system begins a search for a path extending to the destination point, with a search starting point "NODE O (origin)" set at the intersection which connects to the road of the higher hierarchy. Simultaneously, the system executes an in-running guidance process illustrated in Fig. 10.

In a case where the driver has started the running of the vehicle in compliance with the first or temporary guidance suggestion, a guidance suggestion (in-running guidance suggestion) is given in such a way that the information of the intersection located in the traveling direction of the vehicle is offered even when the path search has not ended yet. The in-running guidance suggestion is given every predetermined distance, and the path search is carried forward during the idle time periods of the in-running guidance process.

Concretely, before the vehicle reaches the road of the higher hierarchy searched for in accordance with the flow of Fig. 9 in advance (step 1004), the first guidance suggestion shown in Fig. 11A or Fig. 11B is given (steps 1001 thru 1003). After the higher level has been reached (step 1004), the in-running guidance suggestion toward the destination point is given (steps 1007 through 1009 and 1012) on condition that the search for the path extending from the destination point to the directly-succeeding intersection scheduled to be passed is not completed (steps 1005 and 1010). That is, before the path search ends, the in-running guidance suggestion toward the destination point is displayed as shown in Fig. 11C. Herein, a prompt "PLEASE TURN TO LEFT AT NEXT INTERSECTION" may well be displayed or sounded.

Further, on condition that the search for the path extending from the destination point to the directly-succeeding intersection scheduled to be passed is completed (step 1005 or 1010), the navigation system guides in accordance with the found path thenceforth (step 1006 or 1011).

Meanwhile, in the case of making the search in any of the above processes, a distance cost may well be reduced depending upon the sorts of roads, etc. Thus, the road of the upper level can be selected more preferentially. By way of example, when letter X is let denote the distance between nodes, an express highway is set at 0.7x, a national road at 0.8X, and a major local road at 0.9X with respect to the sorts of the roads, and a width greater than 13 [m] is set at 0X, a width of 5.5 [m] to 13 [m] at 0.05X, and a width less than 5.5 [m] at 0.1X with respect to the widths of the roads. Further, the sum of both the values is set as the cost. As a result, the cost of the major local road having the width of 5.5 [m] to 13 [m] becomes 0.9X + 0.05X = 0.95x. In this case, even when all the roads are managed at a single level without hierarchizing and managing the road data as illustrated in Figs. 3A and 3B, the road suited to the movement of the vehicle can be selected. Therefore, similar effects can be expected.

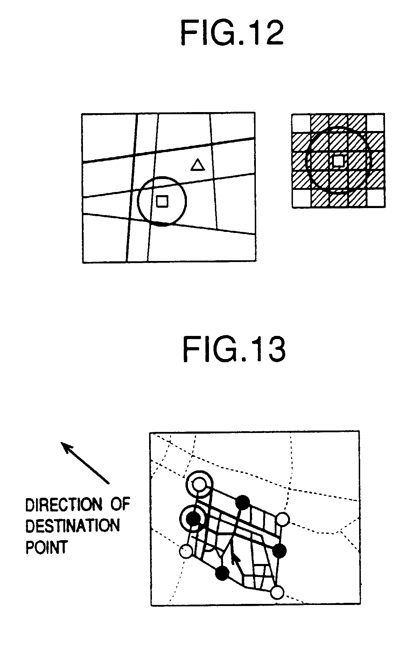

In addition, the candidate search area to-be-searched need not always be set at the square of the predetermined distance (denoted by X) of each of the hierarchies, but the divisional map data contained on and within a circle whose diameter is X as illustrated in Fig. 12 may well be extracted. In this case, the center of the circle is set as a search starting point at the pertinent level. Thus, the candidate search area can be rendered smaller in size. In the case of Fig. 12, white parts (cells not hatched) in the right diagram thereof can be omitted from the candidate search area.

Besides, in the case of searching for the path which extends to the higher level, the single node which can be reached at the minimum cost need not always be selected. Alternatively, as illustrated in Fig. 13, a plurality of nodes which exist around the search starting point and which connect with the respective roads of the higher level are searched for beforehand, and one of the nodes is selected as a search starting point at the higher level on the basis of the direction of the opposite search starting point (on the side of the destination point as opposed to the side of the point of departure) and the traveling direction of the vehicle. Thus, a more preferable path can be selected. In the case of Fig. 13, among the intersections between the roads of the higher level, the intersection which is near the direction of the destination point and which is included within a predetermined angular extent from the traveling direction is set as the search starting point at the higher level.

It is also allowed that traffic control information items (such as "no right or left turn" and "one way") are contained in the road data as the attributes of roads, and that a path search is made considering the control information. By way of example, in a case where the vehicle could not enter any of the higher-level roads included in the real search area, the data contained in the candidate search area are first checked. When any enterable road at the higher level is not found yet, the areal size of the candidate search area is enlarged. Besides, in a case where the road on which the vehicle is running is an unforked road at the pertinent level and where the vehicle cannot go to any place without passing along the road, a lower-level road which connects with the road of the pertinent level and which permits the vehicle to shift to another path is searched for. Incidentally, when the pertinent level is the lowermost one on this occasion, a U-turn is suggested.

Moreover, in a case where local information items (such as information on a traffic snarl and information on a traffic regulation ascribable to, e. g., construction work) possessed by external information sources are acquired from a beacon or the like installed on a road, a path search can be made considering the local information.

As thus far described, according to this embodiment, a path search range is set flexibly in accordance with a regional situation at the time of a search operation, so that the omission of the optimum path from within the search range as in the case of a fixed range can be prevented.

In addition, since most of roads are general roads, objects to be searched for can be efficiently limited.

Besides, in the management of map data, the data are not divided depending upon the situations of roads, so that the maintenance of the data is facilitated.

Further, a guidance suggestion can be promptly given.

In guiding a vehicle, the navigation system guides the vehicle quickly to a higher level affording an easier movement, whereby the vehicle can be driven comfortably.

A path extending to a road of higher level is computed near a current point (a point of departure) beforehand, whereby a path can be suggested immediately after the driver of a vehicle has set a destination point.

As described above, according to the present invention, it is possible to provide a navigation system in which a more preferable path can be quickly searched for by using map data in a form easy of maintenance.

## Claims

1. A navigation system for installation on a vehicle comprising:
storage means (102) for storing therein road data for representing roads, wherein said roads data represents nodes including some nodes being connection points of roads, sorts of roads and shapes of roads, said roads are classified under layers and management areas, and said road data are divided into a plurality of road data units each for a plurality of combinations of the layer and the management area in which corresponding roads are classified, said layers each corresponding to a plurality of sorts of road, respectively;
first setting means (603-605) for setting a point of departure as a first search starting point, setting the layer in which the nearest road to the first search starting point is contained as a first search layer, setting a first candidate search area having a predetermined geographical breadth corresponding to the first search layer, around said first search starting point. and repeating a first process:
said first process being for enlarging the first candidate search area until the first candidate search area contains the node connecting the road belonging to the first search layer to the road belonging to the layer directly higher than the first search layer, when the first candidate area does not contain such a node, searching for a partial path which extends, from the first search starting point, onto the road belonging to the layer directly higher than the first search layer on the basis of the road data units corresponding to the combinations of the management area contained in the current first candidate search area and layer corresponding to the current first search layer, renewing the first search starting point to an end point of the searched partial path, renewing the first search layer to the layer directly higher than a current first search layer, and renewing the first candidate search area so that the renewed first candidate search area has a predetermined geographical breadth corresponding to the renewed first layer, around the renewed first search starting point; and
recommended path generating means (611-616) for searching for remaining partial path extending between the first search starting point finally obtained by said first setting means and the destination point, and subsequently connecting the partial paths obtained by said first setting means with the remaining partial path, thereby obtaining a recommending path which extends from the point of departure to the destination point;
said predetermined geographical breadth having broader geographical breadth when the corresponding first search layer is higher.

2. A navigation system as defined in claim 1, wherein:
said first setting means (603-606) repeats said first process until the destination point is contained in the first candidate search area; and wherein said recommended path generating means (611-616) comprises:
second setting means (611-613) for setting said destination point as a second search starting point. setting the layer in which the road nearest the second search starting point is contained as a second search layer, setting a second candidate search area having a predetermined geographical breadth corresponding to the second search layer around the second search starting point. repeating said first process until said first search layer becomes equal to said second search layer when the first search layer finally obtained by said first setting means is lower than the second search layer, and repeating a second process until said second search layer becomes equal to said first search layer when the second search layer is lower than the first search layer finally obtained by said first setting means;
said second process being for enlarging the second candidate search area until the second candidate search area contains the node connecting the road belonging to the second search layer to the road belonging to the layer directly higher than the second search layer, when the second candidate search area does not contain such a node. searching for a partial path which extends, from the second search starting point, onto the road belonging to the layer directly higher than the second search layer on the basis of the road data units corresponding to the combinations of the management area contained in the current second candidate search area and layer corresponding to the current second search layer renewing the second search starting point to an end point of the searched partial path, renewing the second search layer to the layer directly higher than the current second search layer, and renewing the second candidate search area so that the renewed second candidate search area has a predetermined geographical breadth corresponding to the renewed second search layer, around the renewed second search stating point; and
third setting means (703) for setting an area which circumscribes the current first candidate search area and the current second candidate search area as a search area after said first search layer and said second search layer become equal, searching for a remaining partial path extending between the current first search starting point and the current second search starting point on the basis of said road data units corresponding to the combinations including said management area contained in the search area and subsequently connecting the partial paths searched by said first process and said second process with the remaining partial path, thereby obtaining a recommended path which extends from the point of departure to said destination point;
said predetermined geographical breadth having broader geographical breadth when the corresponding second search layer is higher.

3. A navigation system as defined in claim 1, further comprising:
guidance means for guiding the running of the vehicle according to the recommending path; and
accepting means for accepting said destination point:
wherein:
said first setting means searches first one of the partial path which extends from the first searching point which is the point of departure, onto the road belonging to the layer directly higher than the first search layer, previous to the acceptance of the destination point, and searches remaining partial path or paths after acceptance of the destination point;
said guidance means guides the running of the vehicle on the basis of said first one of the partial path searched previous to the acceptance of the destination point, immediately after acceptance of the destination point.

4. A method for searching a recommended path between a departure point and a destination point, comprising:
step for preparing road data for representing roads, wherein said roads data represents nodes including some nodes being connection points of roads, sorts of roads and shapes of roads, said roads are classified under layers and management areas, and said road data are divided into a plurality of road data units each for a plurality of combinations of the layer and the management area in which corresponding roads are classified, said layers each corresponding to a plurality of sorts of road, respectively;
first setting step (603-605) for setting a point of departure as a first search starting point, setting the layer in which the nearest road to the first search starting point is contained as a first search layer, setting a first candidate search area having a predetermined geographical breadth corresponding to the first search layer. around said first search starting point, and repeating a first process;
said first process being for enlarging the first candidate search area until the first candidate search area contains the node connecting the road belonging to the first search layer to the road belonging to the layer directly higher than the first search layer, when the first candidate area does not contain such a node, searching for a partial path which extends, from the first search starting point, onto the road belonging to the layer directly higher than the first search layer on the basis of the road data units corresponding to the combinations of the management area contained in the current first candidate search area and layer corresponding to the current first search layer, renewing the first search starting point to an end point of the searched partial path, renewing the first search layer to the layer directly higher than a current first search layer, and renewing the first candidate search area so that the renewed first candidate search area has a predetermined geographical breadth corresponding to the renewed first layer, around the renewed first search starting point; and
recommended path generating step (611-616) for searching for remaining partial path extending between the first search starting point finally obtained by said first setting means and the destination point, and subsequently connecting the partial paths obtained by said first setting means with the remaining partial path, thereby obtaining a recommending path which extends from the point of departure to the destination point;
said predetermined geographical breadth having broader geographical breadth when the corresponding first search layer is higher.

## Patentansprüche

1. Navigationssystem zum Einbau in ein Fahrzeug, aufweisend:
Speichermittel (102) zum darin Speichern von Straßendaten zum Repräsentieren von Straßen, wobei die Straßendaten Knoten darstellen inklusive einigen Knoten, die Verbindungspunkte von Straßen sind, Arten von Straßen und Formen von Straßen, wobei die Straßen klassifiziert sind unter Schichten und Verwaltungsgebieten und die Straßendaten in eine Anzahl von Straßendaten-Einheiten aufgeteilt sind, jede für eine Anzahl von Kombinationen der Schicht und des Verwaltungsgebiets, in welche entsprechende Straßen klassifiziert sind, wobei die Schichten jede einer Anzahl von Straßenarten jeweils entsprechen;
erste Einstellmittel (603-605) zum Einstellen eines Abfahrtspunktes als ein erster Suchstartpunkt, Einstellen der Schicht, in welcher die dem ersten Suchstartpunkt nächste Straße als eine erste Suchschicht enthalten ist, Einstellen eines ersten Kandidaten-Suchgebiets, das eine vorbestimmte geographische Breite entsprechend der ersten Suchschicht hat, um den ersten Suchstartpunkt herum, und Wiederholen eines ersten Prozesses;
wobei der erste Prozeß dazu bestimmt ist, das erste Kandidaten-Suchgebiet zu vergrößern, bis das erste Kandidaten-Suchgebiet denjenigen Knoten enthält, der die Straße enthält, welche zu der ersten Suchschicht gehört, mit der Straße, welche zu der unmittelbar höheren Schicht als die erste Suchschicht gehört, wenn das erste Kandidaten-Gebiet einen solchen Knoten nicht enthält, Suchen nach einem partiellen Weg, der von dem ersten Suchpunkt auf der Straße gehört, die zu der unmittelbar höheren Schicht als die erste Schicht gehört, auf der Basis der Straßendaten-Einheiten entsprechend den Kombinationen der Verwaltungsgebiete, die in dem gegenwärtigen ersten Kandidaten-Suchgebiet enthalten sind, und der Schicht entsprechend der gegenwärtigen ersten Suchschicht, Erneuern des ersten Suchstartpunkts zu einem Endpunkt des gesuchten partiellen Weges, Erneuern der ersten Suchschicht auf die unmittelbar höhere Suchschicht als die erste Suchschicht und Erneuern des ersten Kandidaten-Suchgebiets, derart, daß das erneuerte erste Kandidaten-Suchgebiet eine vorbestimmte geographische Breite entsprechend der erneuerten ersten Schicht aufweist, um den erneuerten ersten Suchstartpunkt herum; und
Vorschlagsweg-Erzeugungsmittel (611-616) zum Suchen nach verbleiben-dem partiellen Weg, der zwischen dem ersten Suchstartpunkt, der schließlich durch die ersten Einstellmittel erhalten wurde, und dem Zielpunkt verläuft, und nachfolgend Verbinden der ersten Partialwege, die durch die ersten Einstellmittel erhalten wurden, mit dem verbleibenden Partialweg, wodurch ein Vorschlagsweg erhalten wird, der von dem Abfahrtspunkt zu dem Zielpunkt verläuft;
wobei die vorbestimmte geographische Breite breitere geographische Breite aufweist, wenn die erste Suchschicht höher ist.

2. Navigationssystem gemäß Anspruch 1, bei welchem:
die ersten Einstellmittel (603-606) den ersten Prozeß wiederholen, bis der Zielpunkt in dem ersten Kandidaten-Suchgebiet enthalten ist; und bei welchem die Vorschlagsweg-Erzeugungsmittel (611-616) aufweisen:
zweite Einstellmittel (611-613) zum Einstellen des Zielpunkts als ein zweiter Suchstartpunkt, Einstellen der Schicht, in welcher die dem zweiten Suchstartpunkt nächste Straße als eine zweite Suchschicht enthalten ist, Einstellen eines zweiten Kandidaten-Suchgebiets, welches eine vorbestimmte geographische Breite aufweist, die der zweiten Suchschicht entspricht, um den zweiten Suchstartpunkt herum, Wiederholen des ersten Prozesses, bis die erste Suchschicht gleich der zweiten Suchschicht wird, wenn die erste Suchschicht, die schließlich durch die ersten Einstellmittel erhalten wurde, niedriger ist als die zweite Suchschicht, und Wiederholen eines zweiten Prozesses, bis die zweite Suchschicht gleich der ersten Suchschicht wird, wenn die zweite Suchschicht niedriger als die erste Suchschicht ist, die schließlich durch die ersten Einstellmittel erhalten wurde,
wobei der zweite Prozeß dazu bestimmt ist, das zweite Kandidaten-Suchgebiet zu vergrößern, bis das zweite Kandidaten-Suchgebiet denjenigen Knoten enthält, welcher die Straße, die zu der zweiten Suchschicht gehört, mit der Straße, die zu der unmittelbar höheren als die zweite Suchschicht gehört, verbindet, wenn das zweite Kandidaten-Suchgebiet einen derartigen Knoten nicht enthält, Suchen nach einem partiellen Weg, der von dem zweiten Suchstartpunkt auf der Straße verläuft, welche auf der unmittelbar höheren als die zweite Suchschicht zugehörigen Straße verläuft, auf der Basis der Straßendaten-Einheiten, entsprechend den Kombinationen des in dem gegenwärtigen zweiten Kandidaten-Suchgebiet enthaltenen Verwaltungsgebiets und der Schicht entsprechend der gegenwärtigen zweiten Suchschicht, Erneuern des zweiten Suchstartpunkts zu einem Endpunkt des gesuchten Partialweges, Erneuern der zweiten Suchschicht zu der unmittelbar höheren als die gegenwärtige zweite Suchschicht und Erneuern des zweiten Kandidaten-Suchgebiets, derart, daß das erneuerte zweite Kandidaten-Suchgebiet eine vorbestimmte geographische Breite aufweist, welche der erneuerten zweiten Suchschicht entspricht, um den erneuerten zweiten Suchstartpunkt herum; und
dritte Einstellmittel (703) zum Einstellen eines Gebiets, welches das erste Kandidaten-Suchgebiet und das gegenwärtige zweite Kandidaten-Suchgebiet umschreibt als ein Suchgebiet, nachdem die erste Suchschicht und die zweite Suchschicht gleich geworden sind, Suchen nach einem verbleibenden Partialweg, der zwischen dem gegenwärtigen ersten Suchstartpunkt und dem gegenwärtigen zweiten Suchstartpunkt verläuft, auf der Basis der Straßendaten-Einheiten, die den Kombinationen entsprechen, die das Verwaltungsgebiet aufweist, welches in dem Suchgebiet enthalten ist, und nachfolgend Verbinden der Partialwege, die durch den ersten Prozeß und den zweiten Prozeß gesucht worden sind, mit dem verbleibenden Partialweg, wodurch ein vorgeschlagener Weg erhalten wird, der von dem Abfahrtspunkt zu dem Zielpunkt verläuft;
wobei die vorbestimmte geographische Breite eine breitere geographische Breite aufweist, wenn die zweite Suchschicht höher ist.

3. Navigationssystem gemäß Anspruch 1, weiter aufweisend:
Führungsmittel zum Führen des Fahrens des Fahrzeugs gemäß dem Vorschlagsweg; und
Akezptanzmittel zum Akzeptieren des Zielpunkts;
wobei:
die ersten Einstellmittel einen ersten der partiellen Wege suchen, der von dem ersten Suchpunkt, welcher der Abfahrtspunkt ist, auf der Straße verläuft, die zu der Schicht unmittelbar höher als die erste Schicht gehört, vor dem Akzeptieren des Zielpunkts, und den oder die verbleibenden partiellen Wege nach Akzeptieren des Zielpunkts suchen;
die Führungsmittel das Fahren des Fahrzeugs auf der Basis des ersten der partiellen Wege führt, der vor dem Akzeptieren des Zielpunkts gesucht wurde, unmittelbar nach Akzeptieren des Zielpunkts.

4. Verfahren zum Suchen eines vorgeschlagenen Weges zwischen einem Abfahrtspunkt und einem Zielpunkt, aufweisend:
Schritt zum Vorbereiten von Straßendaten zum Repräsentieren von Straßen, wobei die Straßendaten Knoten repräsentieren inklusive einiger Knoten, die Verbindungspunkte von Straßen sind, Arten von Straßen und Formen von Straßen, wobei die Straßen in Schichten und Verwaltungsgebiete klassifiziert sind und die Straßendaten in eine Anzahl von Straßendaten-Einheiten, jede für eine Anzahl von Kombinationen der Schicht und des Verwaltungsgebiets, in welche entsprechende Straßen klassifiziert sind, unterteilt sind, wobei die Schichten jede eine Anzahl von Straßenarten jeweils entsprechen;
erster Einstellschritt (603-605) zum Einstellen eines Abfahrtspunkts als ein erster Startpunkt, Einstellen derjenigen Schicht, in welcher die dem ersten Suchstartpunkt nächste Straße enthalten ist, als eine Suchschicht, Einstellen eines ersten Kandidaten-Suchgebiets, welches eine vorbestimmte geographische Breite entsprechend der ersten Suchschicht aufweist, um den ersten Suchstartpunkt herum, und Wiederholen eines ersten Prozesses;
wobei der erste Prozeß dazu bestimmt ist, das erste Kandidaten-Suchgebiet zu vergrößern, bis das erste Kandidaten-Suchgebiet denjenigen Knoten enthält, der die Straße, welche zu der ersten Suchschicht gehört, mit der Straße, welche zu der unmittelbar höheren Schicht als die erste Suchschicht gehört, verbindet, wenn das erste Kandidaten-Gebiet einen solchen Knoten nicht enthält, Suchen nach einem partiellen Weg, der von dem ersten Suchpunkt auf der Straße verläuft, die zu der unmittelbar höheren Schicht als die erste Schicht gehört, auf der Basis der Straßendaten-Einheiten entsprechend den Kombinationen des Verwaltungsgebietes, in dem gegenwärtigen ersten Kandidaten-Suchgebiet enthalten, und der Schicht entsprechend der gegenwärtigen ersten Suchschicht, Erneuern des ersten Suchstartpunkts zu einem Endpunkt des gesuchten partiellen Weges, Erneuern der ersten Suchschicht auf die unmittelbar höhere Suchschicht als die erste Suchschicht und Erneuern des ersten Kandidaten-Suchgebiets, derart, daß das erneuerte erste Kandidaten-Suchgebiet eine vorbestimmte geographische Breite entsprechend der erneuerten ersten Schicht aufweist, um den erneuerten ersten Suchstartpunkt herum; und
Vorschlagsweg-Erzeugungsschritt (611-616) zum Suchen nach verbleibendem partiellen Weg, der zwischen dem ersten Suchstartpunkt, der durch die ersten Einstellmittel erhalten wurde, und dem Zielpunkt verläuft, und nachfolgend Verbinden der ersten Partialwege, die durch die ersten Einstellmittel erhalten wurden, mit dem verbleibenden Partialweg, wodurch ein Vorschlagsweg erhalten wird, der von dem Abfahrtspunkt zu dem Zielpunkt verläuft.

## Revendications

1. Système de navigation destiné à être installé dans un véhicule, comprenant :
des moyens de mémoire (102) pour y mémoriser des données de routes, servant à représenter des routes et dans lesquels lesdites données de routes représentent des noeuds incluant certains noeuds qui sont des points de croisement de routes, des types de routes et des formes de routes, lesdites routes étant classées selon des niveaux et des zones de gestion et lesdites données de routes sont subdivisées en une pluralité d'unités de données de routes, chacune pour une pluralité de combinaisons du niveau et de la zone de gestion, dans lesquelles des routes correspondantes sont classées, lesdits niveaux correspondant respectivement à une pluralité de types de routes;
des premiers moyens de réglage (603-605) pour fixer un point d'origine comme premier point de départ de recherche, régler le niveau auquel la route la plus proche du premier point de départ de recherche est contenue en tant que premier niveau de recherche, régler une première zone de recherche candidate possédant une étendue géographique prédéterminée correspondant au premier niveau de recherche, autour dudit premier point de départ de recherche, et répéter un premier processus;
ledit premier processus consistant à étendre la première zone de recherche candidate jusqu'à ce que la première zone de recherche candidate contienne le noeud raccordant la route appartenant au premier niveau de recherche à la route appartenant au niveau directement supérieur à celui du premier niveau de recherche, lorsque la première zone candidate ne contient pas un tel noeud, rechercher un trajet partiel qui s'étend, depuis le premier point de départ de recherche, sur la route appartenant au niveau immédiatement supérieur au premier niveau de recherche sur la base des unités de données de la route correspondant aux combinaisons de la zone de gestion contenue dans la première zone de recherche candidate actuelle et du niveau correspondant au premier niveau de recherche actuel, remplacer le premier point de départ de recherche pour l'amener en un point final du trajet partiel recherché, remplacer le premier niveau de recherche pour l'amener au niveau immédiatement supérieur à un premier niveau de recherche actuel et remplacer la première zone de recherche candidate de telle sorte que la première zone de recherche candidate remplacée possède une étendue géométrique prédéterminée correspondant au premier niveau remplacé, autour du premier point de début de recherche remplacé; et
des moyens recommandés de production de trajet (611-616) pour effectuer une recherche de trajet partiel s'étendant entre le premier point de départ de recherche finalement obtenu par lesdits premiers moyens de réglage et le point de destination, et relier ensuite les trajets partiels fournis par lesdits premiers moyens de réglage avec le trajet partiel restant, ce qui permet d'obtenir un trajet de recommandation qui s'étend du point d'origine au point de destination;
ladite largeur géographique prédéterminée étant une largeur géographique plus étendue lorsque le premier niveau de recherche correspondant est plus élevé.

2. Système de navigation selon la revendication 1, dans lequel :
lesdits premiers moyens de réglage (603-606) répètent ledit premier processus jusqu'à ce que le point de destination soit contenu dans la première zone de recherche candidate; et dans lequel lesdits moyens recommandés (611-616) de production de trajet comprennent :
des seconds moyens de réglage (611-613) pour régler ledit point de destination en tant que second point de départ de recherche, régler le niveau dans lequel la route la plus proche du second point de départ de recherche est contenue en tant que second niveau de recherche, régler une seconde zone de recherche candidate possédant une largeur géographique prédéterminée correspondant au second niveau de recherche autour du second point de départ de recherche, répéter ledit premier processus jusqu'à ce que ledit premier niveau de recherche devienne égal audit second niveau de recherche lorsque le premier niveau de recherche finalement obtenu à l'aide desdits moyens de réglage est inférieur au second niveau de recherche, et répéter un second processus jusqu'à ce que ledit second niveau de recherche devienne égal audit premier niveau de recherche lorsque le second niveau de recherche est inférieur au premier niveau de recherche finalement obtenu à l'aide desdits premiers moyens de réglage;
ledit second processus sert à étendre la seconde zone de recherche candidate jusqu'à ce que la seconde zone de recherche candidate contienne le noeud reliant la route appartenant au second niveau de recherche à la route appartenant au niveau immédiatement supérieur audit second niveau de recherche, lorsque la seconde zone de recherche candidate ne contient pas un tel noeud, rechercher un trajet partiel qui s'étend depuis le second point de départ de recherche, sur la route appartenant au niveau immédiatement supérieur au second niveau de recherche sur la base des unités de données de routes correspondant aux combinaisons de la zone de gestion contenue dans la seconde zone de recherche candidate actuelle et du niveau correspondant au second niveau de recherche actuel remplaçant le second point de départ de recherche par un point d'extrémité du trajet partiel recherché, remplacer le second niveau de recherche par le niveau immédiatement supérieur au second niveau de recherche et remplacer la seconde zone de recherche candidate de sorte que la seconde zone de recherche candidate remplacée possède une largeur géographique prédéterminée correspondant au second niveau de recherche remplacé, autour du second point de départ de recherche remplacé; et
des troisièmes moyens de réglage (703) pour régler une zone qui circonscrit la première zone de recherche candidate actuelle et la seconde zone de recherche candidate actuelle en tant que zone de recherche après que ledit premier niveau de recherche et ledit second niveau de recherche sont devenus égaux, rechercher un trajet partiel restant s'étendant entre le premier point de départ de recherche actuel et le second point de départ de recherche actuel sur la base desdites unités de données de routes correspondant aux combinaisons incluant ladite zone de gestion combinée à la zone de recherche et raccordant ultérieurement les trajets partiels recherchés par ledit premier processus et ledit second processus au trajet partiel restant, ce qui permet d'obtenir un trajet recommandé qui s'étend depuis le point d'origine jusqu'audit point de destination;
ladite largeur géographique prédéterminée étant une largeur géographique plus étendue lorsque le second niveau de recherche correspondant est plus élevé.

3. Système de navigation selon la revendication 1, comprenant en outre :
des moyens de guidage pour guider le déplacement du véhicule conformément au trajet recommandé; et
des moyens d'acceptation pour accepter ledit point de destination;
selon lequel :
lesdits premiers moyens de réglage recherchent tout d'abord un trajet partiel qui s'étend depuis le premier point de recherche, qui est le point de départ, sur la route appartenant au niveau immédiatement supérieur au premier niveau de recherche, avant l'acceptation du point de destination, et recherchent un ou des trajets partiels restants après l'acceptation du point de destination;
lesdits moyens de guidage guident le déplacement du véhicule sur la base dudit premier trajet partiel recherché avant l'acceptation du point de destination, juste après l'acceptation du point de destination.

4. Procédé pour rechercher un trajet recommandé entre un point de départ et un point de destination, comprenant :
une étape pour préparer des données de routes pour représenter des routes, selon laquelle lesdites données de routes représentent des noeuds incluant certains noeuds qui sont des points de jonction de routes, des types de routes et des formes de routes, lesdites routes étant classées selon des niveaux et des zones de gestion et lesdites données de routes étant subdivisées en une pluralité d'unités de données de routes, chacune pour une pluralité de combinaisons du niveau et de la zone de gestion, en lesquelles des routes correspondantes sont classées, lesdits niveaux correspondant respectivement à une pluralité de types de routes;
une première étape de réglage (603-605) pour régler un point d'origine comme premier point de départ de recherche, régler le niveau dans lequel la route la plus proche du premier point de départ de recherche est contenue en tant que premier niveau de recherche, régler une première zone de recherche candidate possédant une étendue géographique prédéterminée correspondant au premier niveau de recherche, autour dudit premier point de départ de recherche, et répéter un premier processus;
ledit premier processus consistant à étendre la première zone de recherche candidate jusqu'à ce que la première zone de recherche candidate contienne le noeud raccordant la route appartenant au premier niveau de recherche à la route appartenant au niveau immédiatement supérieur à celui du premier niveau de recherche, lorsque la première zone candidate ne contient pas un tel noeud, rechercher un trajet partiel qui s'étend, depuis le premier point de départ de recherche, sur la route appartenant au niveau immédiatement supérieur au premier niveau de recherche sur la base d'une unité de données de la route correspondant à la combinaison de la zone de gestion contenue dans la première zone de recherche candidate actuelle et du niveau correspondant au premier niveau de recherche actuel, remplacer le premier point de départ de recherche pour l'amener en un point final du trajet partiel recherché, remplacer le premier niveau de recherche pour l'amener au niveau immédiatement supérieur à un premier niveau de recherche actuel et remplacer la première zone de recherche candidate de telle sorte que la première zone de recherche candidate remplacée possède une étendue géométrique prédéterminée correspondant au premier niveau remplacé, autour du premier point de départ de recherche remplacé; et
une étape (611-616) de production de trajet recommandé pour effectuer une recherche de trajet partiel s'étendant entre le premier point de départ de recherche finalement obtenu par lesdits premiers moyens de réglage et le point de destination, et relier ensuite les trajets partiels fournis par lesdits premiers moyens de réglage au trajet partiel restant, ce qui permet d'obtenir un trajet de recommandation qui s'étend du point d'origine au point de destination;
ladite largeur géographique prédéterminée étant une largeur géographique plus étendue lorsque le premier niveau de recherche correspondant est plus élevé.
